# EUROPÄISCHE PATENTSCHRIFT

(11) **EP 2 026 130 B1**
(45) Veröffentlichungstag und Bekanntmachung des Hinweises auf die Patenterteilung: **26.05.2010**
(21) Anmeldenummer: 07015362.2
(22) Anmeldetag: 06.08.2007
(51) Int. Cl.: G03B 21/58, A47B 97/04, A47B 97/06

(54) **Halterung für eine Projektionstafel**
Support for a projection board
Fixation pour un écran de projection

(43) Veröffentlichungstag der Anmeldung: 18.02.2009
(73) Patentinhaber: Conen Produkte GmbH & Co.KG, 54497 Gonzerath (DE)
(72) Erfinder: Conen, Gerd, 54497 Conzerath (DE)
(74) Vertreter: Schwöbel, Karl T.

(56) Entgegenhaltungen:
- EP-A- 0 107 168
- EP-A- 1 005 810
- WO-A-2006/096962
- DE-A1- 3 301 782
- FR-A- 2 493 008
- GB-A- 1 005 570
- US-A- 579 767
- US-A- 3 047 061
- US-A- 3 144 899

## Beschreibung

### Stand der Technik

Die Erfindung geht aus von einer Halterung für eine Projektionstafel nach dem Oberbegrifff des Anspruchs 1.

Solche Halterungen sind allgemein bekannt. Beispielsweise ist aus der Druckschrift DE 75 27 71 U eine Einrichtung mit einem Tageslichtprojektor und einer höhenverstellbaren Projektionswand bekannt, wobei die Projektionswand an einem Rahmen befestigt ist und wobei der Rahmen über Tragarme höhenverstellbar an einem fahrbaren Gestell angeordnet ist.

### Offenbarung der Erfindung

Die erfindungsgemäße Halterung für eine Projektionstafel gemäß Anspruch 1 hat gegenüber dem Stand der Technik den Vorteil, dass eine zuverlässige und leicht zu bedienende Höhenverstellung einer Projektionstafel mit einer Halterung realisierbar ist, welche im Vergleich zum Stand der Technik eine erheblich höhere Stabilität und Verwindungssteifigkeit aufweist. Weiterhin ermöglicht die erfindungsgemäße Halterung eine vergleichsweise hohe Zuverlässigkeit gegen ein Verkanten der Halterung während der Höhenverstellung der Projektionstafel, insbesondere wenn eine zu einer vertikalen Mittelachse der Projektionswand beabstandeten Kraftwirkung zur Höhenverstellung auf die Halterung ausgeübt wird. Dadurch wird bevorzugt die Integration einer automatischen Festelleinrichtung der Projektionstafel erleichtert, da diese nicht in horizontaler Richtung mittig zwischen dem Halterungsrahmen und dem Führungsrahmen angebracht werden muss. Die vergleichsweise hohe Stabilität, Verwindungssteifigkeit und Zuverlässigkeit gegen ein Verkanten wird durch die doppelte Rahmenbauweise und den gegenüber einer vertikalen Mittellinie der Halterung spiegelsymmetrischen Aufbau der Halterung erreicht. Die Führung der Träger in den Führungshülsen ermöglicht ein Ineinanderführen des Halterungsrahmens und des Führungsrahmens und somit die Verwendung der vergleichsweise stabilen Rahmenbauweise. Die Träger und die Führungshülsen sind somit zwangsläufig parallel zueinander ausgerichtet, wobei die Rahmenbauweise eine maximale Verwindungssteifigkeit sowohl des Führungsrahmens, als auch des Haltungsrahmens bewirkt. Ferner ermöglicht die doppelte Rahmenbauweise in einfacher Weise eine Integration zusätzlicher vertikaler und/oder horizontaler Verstrebungen des Führungsrahmens und/oder des Halterungsrahmens, so dass die Stabilität des jeweiligen Rahmens weiter erhöht wird und/oder Arretierungspunkte beispielsweise zur Befestigung der Projektionstafel geeignet positionierbar sind. Bevorzugt ist eine Befestigung des Führungsrahmens an einer Wand und/oder auf einem fahrbaren Gestellt vorgesehen, wobei besonders bevorzugt jeweils dieselben Befestigungspunkte des Führungsrahmens verwendbar sind.

Erfindungsgemäß weist der Halterungsrahmen eine Feststelleinrichtung auf, welche an dem Halterungsrahmen und dem Führungsrahmen befestigt ist und den Halterungsrahmen gegenüber dem Führungsrahmen in einer beliebigen Relativposition automatisch fixiert. Somit wird in vorteilhafter Weise die Präsentationstafel in jeder möglichen Gebrauchsstellung sicher fixiert, so dass eine Bewegung der Präsentationstafel in Richtung der Gewichtskraft verhindert wird. Insbesondere wird eine Höhenverstellung ermöglicht, wobei ein Benutzer die Tafel vertikal in eine gewünschte Gebrauchsposition verschiebt und die Tafel in dieser Gebrauchsposition automatisch verbleibt. Der Benutzer muss folglich keine manuelle Fixierung der Tafel durch zusätzliche Arbeitsschritte durchführen.

Auch weist die Feststelleinrichtung ein Federelement auf, wobei das Federelement am Führungsrahmen befestigt und bevorzugt über einen Seilzug mit dem Halterungsrahmen verbunden ist, wobei besonders bevorzugt der Seilzug über wenigstens eine Rotationsscheibe umgelenkt wird. Vorteilhaft wirkt somit eine Federkraft des Federelements der Gewichtskraft, welche auf den Halterungsrahmen wirk, entgegen, so dass ein Verschieben der Präsentationstafel entgegen der Gewichtskraft durch das sich zusammenziehende Federelement unterstützt wird und der Benutzter weniger Kraft zur Verschiebung der Präsentationstafel in diese Richtung aufbringen muss. Wird die Präsentationstafel in Richtung der Gewichtskraft verschoben, so spannt sich das Federelement und die Verschiebung der Präsentationstafel durch die Gewichtskraft wird gebremst. Der Benutzer muss daher keine erhöhte Kraftwirkung zum Abbremsen der Präsentationstafel in der gewünschten Gebrauchsposition aufbringen.

Vorteilhafte Ausgestaltungen und Weiterbildungen der Erfindung sind den Unteransprüchen, sowie der Beschreibung unter Bezugnahme auf die Zeichnung entnehmbar.

Gemäß einer weiteren bevorzugten Weiterbildung ist die Feststelleinrichtung derart dimensioniert, dass eine Gewichtskraft, welche auf den Halterungsrahmen wirkt, im Wesentlichen kompensiert wird. Durch eine geeignete Dimensionierung der Rotationsscheibe, des Federelements und/oder des Seilzuges wird die Federkraft derart justiert, dass die Federkraft die Gewichtskraft im Wesentlichen kompensiert, so dass eine Höhenverstellung der Präsentationstafel durch den Benutzer mit vergleichsweise geringem Kraftaufwand, welcher insbesondere ungefähr den Reibungskräften innerhalb der Halterung entspricht, ermöglicht wird und die Präsentationstafel in der gewünschten Gebrauchsposition automatisch verbleibt, sobald keine weitere Kraftwirkung des Benutzers auf die Präsentationstafel ausgeübt wird.

Gemäß einer weiteren bevorzugten Weiterbildung ist ein vertikaler Träger mittels einer Feststellschraube gegenüber einer Führungshülse arretierbar. Vorteilhaft ist somit eine zusätzliche Sicherheitsarretierung der Gebrauchsposition der Präsentationstafel durch den Benutzer möglich.

Gemäß einer weiteren bevorzugten Weiterbildung weist die Halterung einen im Wesentlichen L-förmigen Galgen auf, wobei ein vertikaler Galgenteilbereich drehbar und höhenverstellbar am Halterungsrahmen befestigt ist und wobei ein horizontaler Galgenteilbereich eine Befestigungsvorrichtung aufweist. Vorteilhaft ermöglicht der Galgen in einfacher Weise die Verwendung bzw. die Fixierung weiterer Präsentationsmittel, wie Poster, Karten und/oder Projektionsapparate. Besonders vorteilhaft wird durch die Höhenverstellbarkeit und die Rotationsfähigkeit des Galgens eine variable Aufnahme und/oder Halterung der weiteren Präsentationsmittel ermöglicht. Insbesondere ist ein Verschwenken der weiteren Präsentationsmittel aus dem Sichtfeld der Präsentationstafel heraus möglich. Bevorzugt ist der horizontale Galgenteilbereich parallel zu seiner Längsrichtung derart ausgedehnt, dass ein ausreichend großer Projektionswinkel des Projektionsapparates zur Projektion eines Bildes auf die Präsentationswand erzielt wird.

Gemäß einer weiteren bevorzugten Weiterbildung wird der vertikale Galgenteilbereich in einer weiteren vertikalen Führungshülse des Halterungsrahmens in vertikaler Richtung geführt und insbesondere mittels einer weiteren Feststellschraube gegenüber der weiteren Führungshülse arretiert. Vorteilhaft wird somit eine stabile Führung und/oder Fixierung in vergleichsweise einfacher Weise realisiert, wobei die Führungshülse bevorzugt an den zusätzlichen vertikalen und/oder horizontalen Verstrebungen des Halterungsrahmens und/oder des Führungsrahmens befestigt ist.

Gemäß einer weiteren bevorzugten Weiterbildung ist die Befestigungsvorrichtung gegenüber dem horizontalen Galgenteilbereich höhenverstellbar und/oder weist die Befestigungsvorrichtung eine Drehscheibe zur Befestigung eines Projektionsapparates auf. In besonders vorteilhafter Weise ermöglicht die Drehscheibe zusammen mit dem drehbaren und höhenverstellbaren Galgen eine optimale Ausrichtung oder räumliche Anordnung des Projektionsapparates, so dass insbesondere ein projiziertes Bild des Projektionsapparates in optimaler Qualität auf die Präsentationswand projizierbar ist.

Gemäß einer weiteren bevorzugten Weiterbildung weist der Führungsrahmen Rollen auf, so dass die Halterung fahrbar ist, der Führungsrahmen an einem fahrbaren Gestell befestigt ist und/oder der Führungsrahmen an einer Wand montiert ist. Vorieilhaft wird somit eine Ausrichtung und/oder ein Transport der Halterung für einen Benutzer in einfacher Weise möglich, wobei insbesondere dieselben Befestigungselemente am Führungsrahmen sowohl die Fixierung der Halterung an der Wand, als auch an einem fahrbaren Gestell ermöglicht wird.

Gemäß einer weiteren bevorzugten Weiterbildung weist die Projektionstafel an ihrer Unterseite eine horizontale Rinne auf, so dass in vorteilhafter Weise für einen Benutzer der Präsentationstafel die Ablage von Präsentationsmitteln ermöglicht wird, bspw. von Stiften, einem Zeigestock und/oder einer Fernbedienung für den Projektionsapparat.

Gemäß einer weiteren bevorzugten Weiterbildung weisen die Führungshülsen am oberen und/oder unteren Ende in vertikaler Richtung weitere Federelemente auf, so dass in vorteilhafter Weise an Anschlagskontakt zwischen dem Halterungsrahmen und dem Führungsrahmen in einer oberen oder unteren Endposition des Halterungsrahmens gegenüber dem Führungsrahmen verhindert und/oder abgedämpft wird.

Gemäß einer weiteren bevorzugten Weiterbildung weist die Halterung eine Vorspanneinrichtung, insbesondere eine Gewindestange, zum Vorspannen des Federelements auf, so dass vorteilhaft eine Ausbalancierung bei verschieden schweren Präsentationstafeln und/oder Projektionsapparaten möglich ist. Insbesondere ist eine einfache Verstellmöglichkeit des Federzugs durch eine Verstellmutter auf der Gewindestange möglich.

Ausführungsbeispiele der Erfindung sind in den Zeichnungen dargestellt und in der nachfolgenden Beschreibung näher erläutert.

### Kurze Beschreibung der Zeichnung

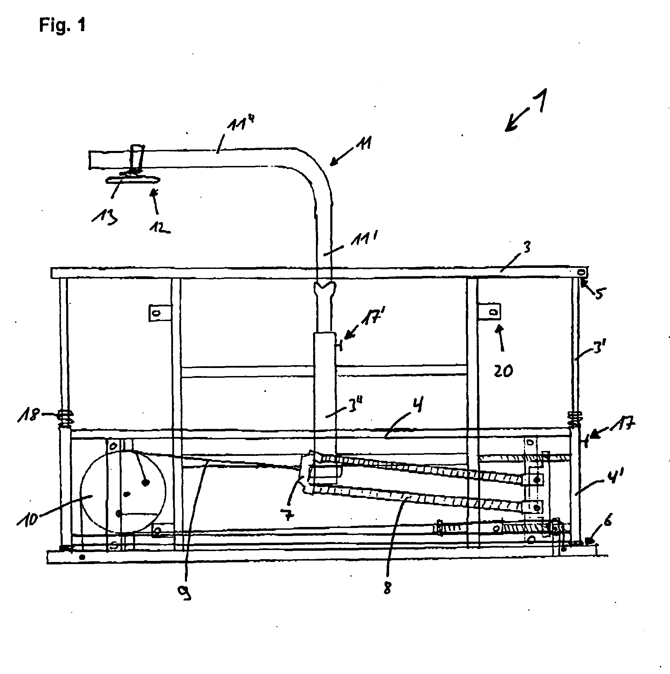

Die **Figur 1** zeigt schematisch eine Rückansicht einer erfindungsgemäßen Halterung für eine Projektionstafel gemäß einer beispielhaften Ausführungsform der Erfindung.

### Ausführungsform(en) der Erfindung

In **Figur 1** ist eine schematische Rückansicht einer Halterung 1 für eine nicht abgebildete Projektionstafel gemäß einer beispielhaften Ausführungsform dargestellt, wobei die Halterung 1 einen Halterungsrahmen 3, einen Führungsrahmen 4 und eine nicht abgebildeten an dem Halterungsrahmen 3 mittels zusätzlichen Arretienungseinrichtungen 20 befestigten Projektionstafel aufweist, wobei ferner der Halterungsrahmen 3 vertikale Träger 3' aufweist und wobei eine Führung der Träger 3' in vertikalen Führungshülsen 4' des Führungsrahmens 4 vorgesehen ist. Eine Feststelleinrichtung 7, welche an dem Halterungsrahmen 3 und dem Führungsrahmen 4 befestigt ist und den Halterungsrahmen 3 gegenüber dem Führungsrahmen 4 in einer beliebigen Relativposition automatisch fixiert, weist ein Federelement 8 auf, wobei das Federelement 8 am Führungsrahmen 4 befestigt und über zwei Seilzüge 9 jeweils befestigt am Halterungsrahmen 3 mit dem Halterungsrahmen 3 verbunden ist. Die Seilzüge 9, ein erster und ein zweiter Seilzug, werden jeweils über zwei Rotationsscheiben 10 aus ihrem vertikalen Verlauf parallel zur wirkenden Gewichtskraft, welche auf das Halterungselement 3 wirkt, in Richtung des im wesentlichen horizontal ausgerichteten Federelements 8 umgelenkt, wobei der zweite Seilzug von beiden Rotationsscheiben 10 umgelenkt wird. Durch eine geeignete Dimensionierung der Rotationsscheiben 10, des Federelements 8 und/oder der Seilzüge 9 wird die Federkraft derart justiert, dass die Federkraft die Gewichtskraft im Wesentlichen kompensiert, so dass eine Höhenverstellung der Präsentationstafel durch den Benutzer mit vergleichsweise geringem Kraftaufwand ermöglicht wird und die Präsentationstafel in der gewünschten Gebrauchsposition automatisch verbleibt, sobald keine weitere Kraftwirkung des Benutzers auf die Präsentationstafel ausgeübt wird. Ferner weist die Halterung 1 einen im Wesentlichen L-förmigen Galgen 11 auf, wobei ein vertikaler Galgenteilbereich 11' drehbar und höhenverstellbar am Halterungsrahmen 3 befestigt ist und wobei ein horizontaler Galgenteilbereich 11" eine Befestigungsvorrichtung 12 aufweist, welche gegenüber dem horizontalen Galgenteilbereich 11" höhenverstellbar ist und eine Drehscheibe 13 zur Befestigung eines nicht abgebildeten Projektionsapparates aufweist. Der der vertikale Galgenteilbereich 11' wird in einer weiteren vertikalen Führungshülse 3" des Halterungsrahmens 3 einer vertikalen Richtung geführt und mittels einer weiteren Feststellschraube 17' gegenüber der weiteren Führungshülse 3" arretierbar. Ferner weisen die Führungshülsen 4' am oberen und unteren Ende in vertikaler Richtung weitere Federelemente 18 auf. Einer der vertikalen Träger 3' ist mittels einer Feststellschraube 17 gegenüber einer Führungshülse 4' arretierbar.

## Patentansprüche

1. Halterung (1) für eine Projektionstafel mit einem Halterungsrahmen (3), einem Führungsrahmen (4) und einer an dem Halterungsrahmen (3) befestigten Projektionstafel, wobei der Halterungsrahmen (3) vertikale Träger (3') aufweist, wobei der Halterungsrahmen (3) eine Feststelleinrichtung (7) aufweist, welche an dem Halterungsrahmen (3) und dem Führungsrahmen (4) befestigt ist und den Halterungsrahmen (3) gegenüber dem Führungsrahmen (4) in einer beliebigen Relativposition fixiert, wobei die Feststelleinrichtung (7) ein Federelement (8) aufweist, wobei das Federelement (8) am Führungsrahmen (4) befestigt und über einen Seilzug (9) mit dem Halterungsrahmen (3) verbunden ist und wobei ferner der Seilzug (9) über wenigstens eine Rotationsscheibe (10) umgelenkt wird, **dadurch gekennzeichnet, dass** eine Führung der Träger (3') in vertikalen Führungshülsen (4') des Führungsrahmens (4) vorgesehen ist.

2. Halterung (1) nach Anspruch 1, **dadurch gekennzeichnet, dass** die Feststelleinrichtung (7) derart dimensioniert ist, dass eine Gewichtskraft, welche auf den Halterungsrahmen (3) wirkt, im Wesentlichen kompensiert wird.

3. Halterung (1) nach einem der vorhergehenden Ansprüche, **dadurch gekennzeichnet, dass** ein vertikaler Träger (3') mittels einer Feststellschraube (17) gegenüber einer Führungshülse (4') arretierbar ist.

4. Halterung (1) nach einem der vorhergehenden Ansprüche, **dadurch gekennzeichnet, dass** die Halterung einen im wesentlichen L-förmigen Galgen (11) aufweist, wobei ein vertikaler Galgenteilbereich (11') drehbar und höhenverstellbar am Halterungsrahmen (3) befestigt ist und wobei ein horizontaler Galgenteilbereich (11 ") eine Befestigungsvorrichtung (12) zur Fixierung weiterer Präsentationsmittel am horizontalen Galgenteilbereich (11") aufweist.

5. Halterung (1) nach Anspruch 4, **dadurch gekennzeichnet, dass** der vertikale Galgenteilbereich (11') in einer weiteren vertikalen Führungshülse (3") des Halterungsrahmens (3) in vertikaler Richtung geführt wird und insbesondere mittels einer weiteren Feststellschraube (17') gegenüber der weiteren Führungshülse (3") arretierbar ist.

6. Halterung (1) nach einem der Ansprüche 4 oder 5, **dadurch gekennzeichnet, dass** die Befestigungsvorrichtung (12) gegenüber dem horizontalen Galgenteilbereich (11 ") höhenverstellbar ist und/oder eine Drehscheibe (13) zur Befestigung des Projektionsapparates aufweist.

7. Halterung (1) nach einem der vorhergehenden Ansprüche, **dadurch gekennzeichnet, dass** der Führungsrahmen (4) Rollen aufweist, so dass die Halterung (1) fahrbar ist, der Führungsrahmen an einem fahrbaren Gestell befestigt ist oder der Führungsrahmen (4) an einer Wand montiert ist.

8. Halterung (1) nach einem der vorhergehenden Ansprüche, **dadurch gekennzeichnet, dass** die Projektionstafel an ihrer Unterseite eine horizontale Rinne aufweist.

9. Halterung (1) nach einem der vorhergehenden Ansprüche, **dadurch gekennzeichnet, dass** die Führungshülsen (4') am oberen und/oder unteren Ende in vertikaler Richtung weitere Federelemente (18) aufweisen.

10. Halterung (1) nach einem der vorherigen Ansprüche, **dadurch gekennzeichnet, dass** die Halterung eine Vorspanneinrichtung, insbesondere eine Gewindestange, zum Vorspannen des Federelements (8) aufweist.

## Claims

1. Support (1) for a projection board comprising a support frame (3), a guide frame (4) and a projection board fastened to the support frame (3), the support frame (3) having vertical support beams (3'), the support frame (3) having a locking means (7) which is fastened to the support frame (3) and the guide frame (4) and fixes the support frame (3) in any desired position relative to the guide frame (4), the locking means (7) having a spring member (8), the spring member (8) being fastened to the guide frame (4) and connected to the support frame (3) via a Bowden cable (9), and the Bowden cable (9) further being deflected by at least one rotary disc (10), **characterised in that** the support beams (3') are guided in vertical guide sleeves (4') of the guide frame (4).

2. Support (1) according to claim 1, **characterised in that** the dimensions of the locking means (7) are designed in such a way that a weight which acts upon the support frame (3) is substantially compensated.

3. Support (1) according to any one of the preceding claims, **characterised in that** a vertical support beam (3') can be locked relative to a guide sleeve (4') by a locking screw (17).

4. Support (1) according to any one of the preceding claims, **characterised in that** the support has a substantially L-shaped bracket (11), a vertical bracket region (11') being fastened to the support frame (3) in a rotatable and height-adjustable manner and a horizontal bracket region (11") having a fastening device (12) for fixing further presentation means to the horizontal bracket region (11").

5. Support (1) according to claim 4, **characterised in that** the vertical bracket region (11') is guided in a further vertical guide sleeve (3") of the support frame (3) and, in particular, can be locked relative to the further guide sleeve (3") by a further locking screw (17').

6. Support (1) according to either claim 4 or claim 5, **characterised in that** the height of the fastening device (12) relative to the horizontal bracket region (11") can be adjusted and/or the fastening device has a rotary disc (13) for fastening the projector.

7. Support (1) according to any one of the preceding claims, **characterised in that** the guide frame (4) has rollers so the support (1) is movable, the guide frame is fastened to a movable stand or the guide frame (4) is mounted on a wall.

8. Support (1) according to any one of the preceding claims, **characterised in that** the underside of the projection board has a horizontal groove.

9. Support (1) according to any one of the preceding claims, **characterised in that**, in the vertical direction, the upper and/or lower ends of the guide sleeves (4') have further spring members (18).

10. Support (1) according to any one of the preceding claims, **characterised in that** the support has a bias means, in particular a threaded rod, for biasing the spring member (8).

## Revendications

1. Support (1) pour un tableau de projection avec un cadre de support (3), un cadre de guidage (4) et un tableau de projection fixé sur le cadre de support (3), le cadre de support (3) présentant des porteurs (3') verticaux, le cadre de support (3) présentant un équipement de blocage (7) qui est fixé au cadre de support (3) et au cadre de guidage (4) et qui fixe le cadre de support (3) dans une position relative quelconque par rapport au cadre de guidage (4), l'équipement de blocage (7) présentant un élément à ressort (8), l'élément à ressort (8) étant fixé sur le cadre de guidage (4) et raccordé au cadre de support (3) par le biais d'une commande par câble (9), et la commande par câble (9) étant en outre déviée par le biais d'au moins un disque de rotation (10), **caractérisé en ce qu'**un guidage des porteurs (3') est prévu dans des douilles de guidage (4') verticales du cadre de guidage (4).

2. Support (1) selon la revendication 1, **caractérisé en ce que** l'équipement de blocage (7) est dimensionné de sorte qu'un poids qui agit sur le cadre de support (3) est sensiblement compensé.

3. Support (1) selon l'une quelconque des revendications précédentes, **caractérisé en ce qu'**un porteur (3') vertical peut être arrêté au moyen d'une vis de blocage (17) par rapport à une douille de guidage (4').

4. Support (1) selon l'une quelconque des revendications précédentes, **caractérisé en ce que** le support présente une potence (11) sensiblement en forme de L, une zone de partie de potence (11') verticale étant fixée en rotation et de façon réglable en hauteur sur le cadre de support (3), et une zone de partie de potence (11") horizontale présentant un dispositif de fixation (12) pour la fixation d'autres moyens de présentation sur la zone de partie de potence (11") horizontale.

5. Support (1) selon la revendication 4, **caractérisé en ce que** la zone de partie de potence (11') verticale est guidée dans une autre douille de guidage (3") verticale du cadre de support (3) et peut être arrêtée en particulier au moyen d'une autre vis de blocage (17') par rapport à l'autre douille de guidage (3").

6. Support (1) selon l'une quelconque des revendications 4 ou 5, **caractérisé en ce que** le dispositif de fixation (12) est réglable en hauteur par rapport à la zone de partie de potence (11") horizontale et/ou présente un disque tournant (13) pour la fixation de l'appareil de projection.

7. Support (1) selon l'une quelconque des revendications précédentes, **caractérisé en ce que** le cadre de guidage (4) présente des rouleaux de sorte que le support (1) peut se déplacer, **en ce que** le cadre de guidage est fixé sur un châssis mobile ou **en ce que** le cadre de guidage (4) est monté sur une paroi.

8. Support (1) selon l'une quelconque des revendications précédentes, **caractérisé en ce que** le tableau de projection présente sur son côté inférieur une rigole horizontale.

9. Support (1) selon l'une quelconque des revendications précédentes, **caractérisé en ce que** les douilles de guidage (4') présentent d'autres éléments de ressort (18) au niveau de l'extrémité supérieure et/ou inférieure dans la direction verticale.

10. Support (1) selon l'une quelconque des revendications précédentes, **caractérisé en ce que** le support présente un équipement de prétension, en particulier une tige filetée, pour la prétension de l'élément de ressort (8).
